Europäisches Patentamt

European Patent Office

Office européen des brevets

(19)

(11) EP 0 466 840 B1

(12) **EUROPÄISCHE PATENTSCHRIFT**

(45) Veröffentlichungstag und Bekanntmachung des Hinweises auf die Patenterteilung:
**08.05.1996 Patentblatt 1996/19**

(21) Anmeldenummer: **90912645.0**

(22) Anmeldetag: **31.08.1990**

(51) Int Cl.[6]: **F24D 15/04**, F25B 39/00

(86) Internationale Anmeldenummer:
**PCT/EP90/01451**

(87) Internationale Veröffentlichungsnummer:
**WO 91/06811 (16.05.1991 Gazette 1991/11)**

(54) **DIREKT-FLÄCHENHEIZUNGS-/KÜHLUNGSANLAGE**

DIRECT SURFACE HEATING/COOLING INSTALLATION

INSTALLATION DE CHAUFFAGE/REFROIDISSEMENT DIRECTEMENT SUR LA SURFACE

(84) Benannte Vertragsstaaten:
**DE DK ES FR GB SE**

(30) Priorität: **30.10.1989 DE 3936332**

(43) Veröffentlichungstag der Anmeldung:
**22.01.1992 Patentblatt 1992/04**

(73) Patentinhaber: **SCHEEL, Henning**
**D-23972 Lübow (DE)**

(72) Erfinder: **SCHEEL, Henning**
**D-23972 Lübow (DE)**

(56) Entgegenhaltungen:
DE-A- 3 130 635          FR-A- 1 028 448
FR-A- 2 523 701          GB-A- 2 022 813
US-A- 4 233 818

**Beschreibung**

Stand der Technik

In Decken, Wänden und Fußböden eingebaute Strahlungsheizungen mit warmwasserdurchflossenen Kupferrohren sind seit der Jahrhundertwende bekannt, vergl. Glück, B.: Strahlungsheizung - Theorie und Praxis, C.F. Müller, Karlsruhe 1982.

Im Rietschel-Raiß: Heiz-und Klimatechnik, 15. Aufl. 1968, steht auf Seite 167: "Als Heizmittel kommt bei zentralen Flächenheizungen lediglich Warmwasser in Frage, weil bei der langsamen Aufwärmung des Wassers Wärmespannungen, die zu Rissebildung in Wänden und Decken führen können, vermieden werden."

Im Recknagel, Sprenger, Hönmann: Taschenbuch für Heizung+Klimatechnik 88/89, Oldenburg, München 1987, steht auf Seite 380: "Jede bekannte Fußbodenheizung läßt sich auch mit Kunststoffrohren ausführen."

Ein DIK-Normenentwurf: Warmwasser-Fußbodenheizung DIN 4725 liegt seit 1983 vor. Wärmepumpen sind in der Bundesrepublik in DIN 8900 ff genormt. Strahlungsheizungen werden in der Patentklasse F 24 C, Fußbodenheizungen in F 24 D 3/12 und Wärmepumpenverwendung für Raumheizung in F 24 D 11/02 beschrieben.

Bekannte Warmwasser-Flächenheizungen enthalten Heizwasser-Umwälzpumpen, Frostschutzmittel, Entlüfter und Ausdehnungsgefäße. Sie können verschlammen. Bekannte Wärmepumpen zur Raumheizung/Kühlung enthalten oft einen Kondensator, der die Kondensationswärme auf ein zusätzliches Heizmedium überträgt.

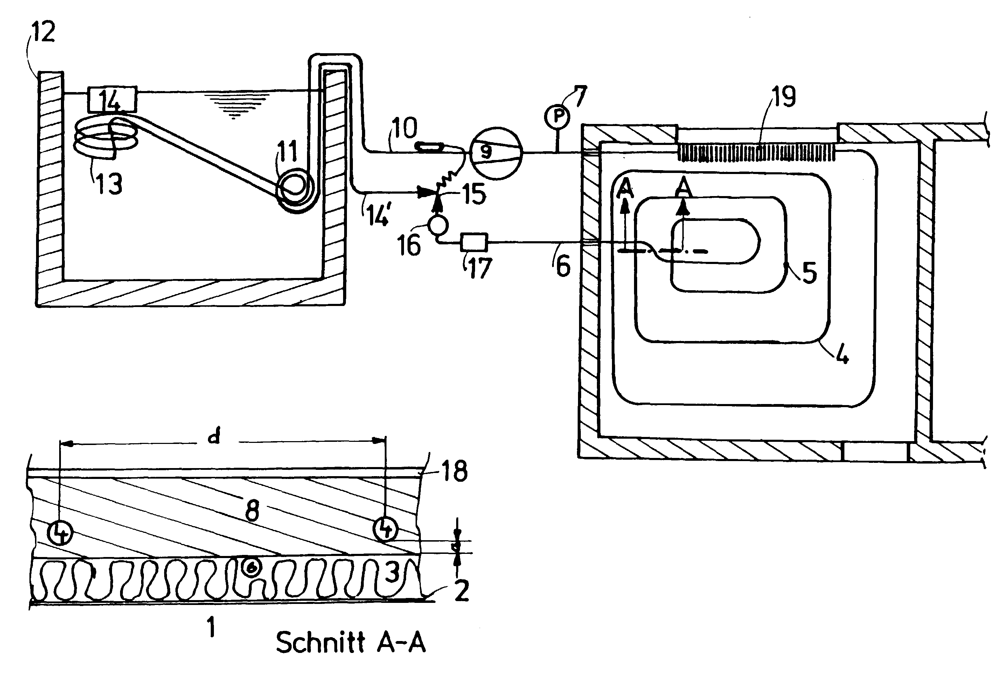

In der FR-A-2523701 ist eine Wärmepumpenanlage beschrieben, bei der ein Direktverdampfer unter der Erdoberfläche vor einem Haus eingebaut ist. Das hier verdampfte Kältemittel wird verdichtet und etwa in der Mitte des Hauses in eine meanderförmig im Fußboden eingebaute Rohrschlange gedrückt, die überall etwa den gleichen gegenseitigen Rohrabstand aufweist, wo es kondensiert. Über eine direkt vor der kalten Außenwand verlegte Rohrschleife wird das kondensierte Kältemittel einem Druckreduzierventil zugeführt, in dem es entspannt und dem aus parallelen Rohrschleifen aufgebauten Direktverdampfer wieder zugeführt wird, vergl.Fig.1.

In Fig.5 ist der Kondensator in einem Schwimmbecken in etwa der halben Wassertiefe fest eingebaut. Das Haus soll dadurch gekühlt werden, daß durch Kreislaufumkehr der im Fußboden eingebaute Kondensator zum Verdampfer wird.

Viele Versuche haben ergeben, daß ein so gekühlter Fußboden für Menschen unbehaglich ist.

Es ist ungünstig, den Rohrkondensator im Fußboden von der Hausmitte her zu beaufschlagen, weil dann die Überhitzungswärme sich hier sofort verteilt und die Außenwände lange kalt bleiben.

Verstärkt wird dieser nachteilige Effekt durch die gleichmäßigen Rohrabstände und den hohen Druck- und damit Temperaturverlust, der von den vielen engen Rohrbögen der meanderförmigen Verlegung der Heizrohre herrührt.

Weil kein Kältemittel-Sammler vorhanden ist, ist es ausgesprochen schwierig, die richtige Kältemittel-Füllmenge einzusetzen, mit der diese Anlage sowohl im Herbst alsauch im Winter hohe Heizleistungen bei günstigen Leistungszahlen erzielt.

Geringe Kältemittelverluste, die hier hohe Heizleistungsminderungen zur Folge haben, können nicht sofort entdeckt werden: die Heizwirkung des fest eingebauten Schwimmbeckenkondensators ist keineswegs optimal.

Aufgabe

Aufgabe der Erfindung ist es, auf Heizwasser-Umwälzpumpen, Frostschutzmittel, Entlüfter und Ausdehnungsgefäße zu verzichten und zusätzlich die Wirksamkeit des Heizens und Kühlens wesentlich zu verbessern. Weitere Aufgaben sind:

a) die Herstellungs-, Betriebs- und Wartungskosten zu senken,
b) eine Heizanlage bei geringem Mehraufwand - einem Vierwegeventil - zur Kühlung einzusetzen,
c) die mögliche Wärmeabgabe pro Heizkreis zu erhöhen durch Verwendung eines Heizmittels mit hoher Enthalpie.
d) die Fußbodenheizungs-typische, lange Anheizdauer der Aufenthaltsräume, vor allem an kritischen Orten, zu senken,
e) die Raumtemperaturregelung zu vereinfachen,
f) das Biegen des metallischen Heizrohres von Hand in engen Biegeradien durch den beim Einbau aufgebrachten Innendruck zu ermöglichen,
g) und dadurch auch die Dichtigkeit des eingebauten Heizrohres einfach und sicher kontrollieren zu können,
h) die Nachteile eines in einem Wasserspeicher fest eingebauten Verdampfer/Kondensators durch seine schwimmende Anordnung zu beheben,
i) die Menschen vor unnötiger Luftverschmutzung zu bewahren und
j) ihre Behaglichkeit in geheizten bzw. gekühlten Räumen zu erhöhen.

Gegenüber FR-A-2523701 soll das Haus durch geringere Strahlungstemperaturunterschiede zwischen den einzelnen Raumumfassungsflächen wesentlich behaglicher beheizt und gekühlt werden, Kondensator und Verdampfer sollen durch eine widerstandsärmere Rohrführung, die auf die Heiz/Kühlerfordernisse des Einsatzortes im Fußboden oder im Schwimmbecken genau abgestimmt ist, eine bessere Wirkung und Leistungszahl ermöglichen und die aus Umweltschutzgründen sammlerlos ausgeführte Wärmepumpe soll besser füll- und wartbar sein.

Lösung

Die Lösung dieser Aufgaben erfolgt durch die Merkmale des Anspruchs 1. Dabei wird eine Wärmebedarfsberechnung für das Objekt z.B. nach DIN 4701 erstellt und die notwendige Heizflächenübertemperatur gemäß dem in der Basiskennlinie gemäß Bild 1 DIN 4725 Teil 2 festgehaltenen Zusammenhang zwischen Heizflächenleistung und Übertemperatur bestimmt und gemäß den beim Betrieb von erfindungsgemäßen Anlagen gewonnenen Erfahrungen eine geeignete Anordnung der erfindungsgemäßen Direkt-Flächenheizungs/Kühlungsanlage konstruiert und realisiert.

Entgegen dem Stand der Technik, Kupferrohre für Fußbodenheizungen mit einem Mantel aus Kunststoff zu versehen (2) und drucklos einzubauen, wird das Heizrohr aus Metall nackt in der oben ermittelten Anordnung verlegt, wobei es vor oder unmittelbar nach der Verlegung z.B. mit ölfreier Druckluft auf 25 bar aufgeblasen und damit vorgespannt wird. Dann wird das nackte Heizrohr in handelsüblichen Beton, Estrich oder Putz mit möglichst geringer Wasserzugabe sorgfältig eingebaut. Durch den Innendruck sind enge Biegeradien bei der Verlegung von Hand durch eine einzige Person erzielbar und das gefürchtete Abknicken des Rohres tritt kaum noch auf. Der im Heizrohr anstehende Druck wird laufend, z.B. durch ein Manometer überwacht. Schaden können sofort entdeckt werden.

Korrosionsschäden an der Außenseite eines vollständig eingebetteten SF-CU F 20 Kupferrohres sind selten. Praktisch alle bisher eingetretenen Korrosionsschäden lassen sich auf einen der folgenden Fälle zurückführen, vergl. u.a. (11):

a) Im Betonzuschlagstoff ist Kohlenstoff, z.B. Asche enthalten,
b) es sind Fäkalien, Ammoniak, Harnstoff, Chloride usw. drin,
c) die Einbettung ist nicht dicht gegen für Kupfer aggressive Substanzen, z.B. $FeCl_3$ und andere Wasserbehandlungsmittel.

Diese Substanzen müssen gemieden werden. In Schwimmbädern o.ä. kann es sinnvoll sein, eine gegen Sickerwasser dichte Kunststoffschicht oberhalb der Kupferrohre einzubauen.

Die Inbetriebnahme erfolgt, nachdem der Baustoff seine Endfestigkeit weitgehend erreicht hat. Dazu wird das Heizrohr als Kondensator einer Kälteanlage eingesetzt, wie sie unten beschrieben ist. Die Kälteanlage wird evakuiert, getrocknet und mit einem Kältemittel: z.B. mit R 12 (4) oder, umweltfreundlicher, mit R 22 (4) oder - nach Abschluß des andauernden, umfangreichen Prüfprogrammes (5) - mit H-FKK 134a befüllt.

Entgegen dem Stand der Technik, die Temperatur des Baustoffes nur um max. 5 K je Tag zu erhöhen, vergl. (2), Seite 9, kann diese Fußbodenheizung sofort mit voller Leistung betrieben werden.

Vorteilhaft gegenüber mit konventionellen Wärmeerzeugern ausgerüsteten Fußbodenheizungen ist es, daß hier die bekannten Vorzüge einer Wärmepumpe voll zum Tragen kommen. Insbesondere ist der laufend notwendige Energieeinsatz um 2/3 bis 3/4 geringer.

Vorteilhaft gegenüber konventionellen Wärmepumpen ist, daß der übliche Wärmeübertrager, der die Kondensationswärme auf das Heizmedium überträgt, weggefallen ist. Der Kältemitteldampf kondensiert direkt im Heizrohr, das innen - physikalisch bedingt - überall dieselbe Temperatur annimmt, wenn von dem auslegungsbedingt geringen Druckabfall im Heizrohr und von der sogenannten Überhitzungswärme, s.u., abgesehen wird. Eine schädliche Spreizung, vergl. DIN 4725 Teil 1 Pkt. 2.14.3, wird vermieden. Der Wärmeübergang von kondensierendem Kältemittel an die Innenwand des Heizrohres ist erheblich besser als beim Heizmedium Wasser.

Quantitativ gesehen sind bei der erfindungsgemäßen Wärmepumpen-Direktfußbodenheizung um etwa 10 K niedrigere Kondensationstemperaturen erforderlich, um die gleiche Normkennlinie nach DIN 4725 Teil 2, Bild 2 zu erzielen: Der Verdichtungsenddruck kann typischerweise 3 bis 4 bar geringer sein. dadurch werden ca. 25 % Antriebsarbeit gespart, der Verdichter wird weit weniger belastet, auf den üblichen Kühlventilator kann verzichtet werden, die Ausfälle der Wärmepumpe verringern sich und ihre Lebensdauer dürfte sich etwa verdoppeln. Weil der Energieeinsatz geringer ist, ist die Luftverschmutzung, die mit der Erzeugung dieser Energieform verbunden ist, geringer.

Wegen der hohen Kondensationswärme der eingesetzten Kältemittel und der geringen Druckverluste des Kältemittelgases im Heizrohr ist es möglich, mit einem Heizkreis aus Rohr der Dimension 14 Ø Dicke 0,8 mm, statt maximal ca. 2 kW, vergl. (2), Diagramm 8, immerhin mindestens 10 kW an Wärmeleistung - bei einer maximalen Gasgeschwindigkeit von nur ca. 6 bis 8 m/s - zu erzielen.

Ein weiterer Vorzug der erfindungsgemäßen Wärmepumpen-Direktfußbodenheizung ist es, daß das Kältemittelgas überhitzt - 20 bis 30 % der Kondensationswärme werden systembedingt auf einem höheren Temperaturniveau, als es der Kondensationstemperatur entspricht, abgegeben - in die Randzone, vergl. DIN 4725 Teil 1 Pkt. 2.6, geführt wird, die sich dann - auch bei geringer Kondensationstemperatur - besonders stark aufheizt. Das ist mit keinerlei Wirkungsgradverschlechterung verbunden.

Die Forderung nach höherer und schnellerer Wärmeabgabe vor kalten Raumumschließungsflächen läßt sich in einfacher Weise dadurch realisieren, daß dort vorgeschaltete Konvektoren angeordnet werden, vergl. Fig. 1, (19). Sie können so aufgrund der mit dieser Erfindung gemachten Erfahrung ausgelegt werden, daß sie nicht mit stundenlanger Verzögerung, sondern schon in Minutenschnelle nach Inbetriebnahme der Wärmepumpe bis zu 50 % der Auslegungsleistung dem Raum an Wärme zuführen.

Um dieselbe Anlage, die vorzugsweise als Deckenstrahlungsheizung ausgeführt wird, auch als überaus wirksame Kühlanlage - im Kühlfall ist wegen der dann üblicherweise höheren Verdampfungstemperatur die Kühlleistung dieser Anlage besonders hoch - einsetzen zu können, ist es im weseutlichen nur erforderlich, z. B. durch ein handelsübliches, preiswertes, automatisch zu bedienendes Umkehrventil den Kältemittelstrom so umzukehren, daß die Kondensatorfläche in der Raumdecke jetzt Verdampfer wird.

Um Regelschwingungen der Innentemperatur $\vartheta_i$, die bei Verwendung von innenraumthermostaten eintreten können und die Behaglichkeit stören, zu vermeiden, hat es sich bewährt, die Wärmepumpenanlage außentemperaturgeführt vor Erreichung der niedrigsten Tagesaußentemperatur jeweils mehrere Stunden pro Tag laufen zu lassen. Dabei erreicht die Fußbodentemperatur $\vartheta_F$ kurz nach Eintritt der niedrigsten Tagesaußentemperatur gerade dann ihr Maximum, wenn auch der Wärmebedarf am höchsten ist.

Versuche, die mit der unten beschriebenen Wärmepumpen-Direktfußbodenheizung durchgeführt wurden, haben ergeben, daß es sinnvoll sein kann, diese Direktfußbodenheizung als Fußboden-Speicherheizung auszulegen. Sie läuft dann außentemperaturgeführt üblicherweise einige Stunden vor Sonnenaufgang und schaltet beim Sonnenaufgang ab. Danach bleibt der ausgerüstete Raum den ganzen Tag über wohlig warm. Ist der Heizestrich dünn ausgeführt, kann es notwendig werden, die Anlage bei Sonnenuntergang nochmals - aber für kürzere Zeit - zu betreiben.

Es ist sinnvoll, als Wärmequelle einen mehrere Kubikmeter fassenden Wasserspeicher (12) einzusetzen, wenn er vorhanden ist und ihn gegebenenfalls sogar einfrieren zu lassen, um die Erstarrungswärme auszunutzen (Eisspeicher). Soll dieser Wasserspeicher (12) auch z.B. zur Gartenbewässerung eingesetzt werden, müßte der Verdampfer (13) am tiefsten Punkt des Speichers eingebaut werden, um viel Wasser entnehmen zu können, ohne die Funktion der Wärmepumpe erheblich zu behindern. Das ist ungünstig, weil sich bei vollem Speicher (12) dann unten eine kalte Zone ausbildet. Dadurch sinken die Verdampfungstemperatur und damit auch die Heizleistung unnötig ab, denn erfindungsgemäß ausgeführte Hohrschlangenverdampfer (13), die an haarnadelförmig (11) gebogenen Einspritz- (14') und Saugleitungen (10) geführt durch einen Schwimmer (14) immer direkt in der wärmsten Zone des Speichers (12) - jedenfalls bei Wassertemperaturen über 4° C - also direkt unter seiner uberfläche aufgehängt sind, haben sich ausgezeichnet bewährt.

Ein Vorzug der Wärmepumpen-Direktfußbodenspeicherheizung ist es, daß sie durch einen einfachen, hochdruckseitig angeschlossenen Pressostaten, der bei Überschreitung des eingestellten Druckes, der ja der Kondensationstemperatur genau entspricht, den Verdichter abschaltet, zuverlässig gegen unzulässige Temperaturen geschützt werden kann.

Die erfindungsgemäße Fußbodenheizung läßt sich allerdings keinesfalls mit den im Fußbodenheizungsbau eingeführten Kunststoffrohren ausführen, weil diese gegenüber den verwendeten Kältemitteln keineswegs völlig diffusionsdicht sind, vergl. (6). Unzulässige Kältemittelverluste wären die Folge. Die erfindungsgemäße Fußbodenheizung zählt danach nicht zu dem im Recknagel, Sprenger, Hönmann s.o. für 1988/1989 beschriebenen Stand der Technik.

Ausführungsbeispiel

Es wurde ein 26 m² großes Apartment, Wärmebedarf $\dot{Q}_T + \dot{Q}_L$ = 2.200 W, ausgelegt, mit einer Wärmepumpen-Direktfußbodenheizung nach Fig. 1/1 gebaut und zwei Heizperioden lang betrieben.

Auf das mit Magerbeton (1) abgedeckte Erdreich wurde eine Bitumenschweißbahn (2) eingebaut und darauf eine 3 cm dicke Wärmedämmung (3) aus Polystyrolschaum mit einer Dichte von 25 kg/m³ verlegt. Darauf wurden im Bereich der 18 m² großen heizenden Fußbodenfläche 50 laufende Meter blankes Metallrohr (4,6) aus weichem Kupfer gemäß DIN 59753 SF-Cu F 20 15x1 von Hand in zirkularer Anordnung mit einem minimalen Abstand d = 15 cm und einem maximalen Abstand von d = 50 em ausgerollt und plan ausgerichtet. Der Erfinder allein benötigte dafür weniger als eine Arbeitsstunde.

Das Heizrohr (4) wurde mit phosphathaltigem Kupferbasishartlot L-CuP6 nach DIN 8513 Teil 1 flußmittelfrei, vergl. (1), an der Stelle (5) mit dem am anderen Ende zuzelöteten Kondensatrohr (6) aus SF-Cu F 20 und dem Manometer (7) hartverlötet und mit ölfreier Freßluft auf 25 bar aufgeblasen. Dieser Druck blieb 40 Tage lang - von einem unten angesprochenen Schaden und von temperaturbedingten Sehwankungen abgesehen - unverändert stehen.

Bei einer Umgebungstemperatur von 15 - 20° C wurde das zunächst auf der Dämmung (3) liegende Heizrohr (4,6) mit einem steifen Estrich, der 400 kg/m³ handelsüblichen Portlandzement und 160 ltr/m³ Anmachwasser (Wasserzezetwert w/z = 0,4) und einen geringen Zusatz von Verarbeitungsverbesserer enthielt, abschnittsweise bedeckt und vorverdichtet, wobei das Heizrohr (4,6) von Hand mit einem lichten Abstand von a = ca. 1 cm von der Dämmung (3) positioniert wurde. Eine halbe Stunde danach wurde dieser Teil der 8 cm dicken Lastverteilschicht (8) sorgfältig nachverdichtet. Ein anderer Teil wurde mit Gips, dem 30 Gewichtsprozent Aluminiumspäne zugesetzt waren, ausgeführt.

Nach 40 Tagen wurde ein im Freien schwingend aufgestellter Vollhermetik-Kältemittelverdichter (9) mit einem Hubvolumen von 26 cm$^3$ hochdruckseitig mit dem Heizrohr (4) und niederdruckseitig mit dem Saugrohr (10) aus SF-Cu F 20 hartverlötet. Dieses Saugrohr (10) wurde über den Rand eines 3 m tiefen, 36 m$^3$ fassenden Gartenbewässerungsspeicher (12) gezogen, nach unten geführt und in halber Höhe zu einer Haarnadelfeder (11) gebogen und quer durch den Speicher (12) zu einem aus Kupferrohr gewikkelten Verdampfer (13) geführt, der an einem Schwimmer (14) so befestigt ist, daß er immer direkt unter der Wasseroberfläche des Speichers (12) schwimmt. Eingangsseitig ist der Verdampfer (13) über das Einspritzrohr (14') mit dem thermostatisch geregelten Einspritzventil (15) verbunden, dem das Kältemittel über das Schauglas (16) und den Kältemittel-Filtertrockner (17) flüssig (kondensiert) aus dem Heizrohr (6) zugeführt wird.

Durch eine Ungeschicklichkeit von Mitarbeitern wurde das Heizrohr nach der Verlegung der Fliesen beschädigt. Der Schaden wurde durch eine an der Schadensstelle eingebaute, hartverlötete Muffe behoben. Das dauerte weniger als eine Arbeitsstunde.

Vor Inbetriebnahme wurden alle Rohre mit Preßluft gereinigt. Die Anlage wurde zunächst mit einem 26 cm$^3$ Hubvolumen ausgestatteten Verdichter, der etwa 130 % des o.a. Auslegungs-Wärmebedarfs bringt, ausgerüstet, sorgfältig evakuiert und mit 1,7 kg Kältemittel R 12 befüllt.

Die Anlage lief sofort einwandfrei. Die Füllmenge erwies sich als völlig unkritisch: Eine Überfüllung von 0,5 kg führte zu einer kaum meßbaren Erhöhung der Antriebsleistung $P_e$.

Umfangreiche Messungen ergaben den gleichen Zusammenhang zwischen Heizflächenübertemperatur und Wärmestromdichte, den die Basiskennlinie in DIN 4725 darstellt. Messungen zur Normkennlinie, vergl. DIN 4725 Teil 2, Bild 2, ergaben erheblich geringere Heizmittel-Ubertemperaturen, um die gleichen Wärzestromdichten zu erreichen.

Um die auch in der Literatur beschriebene Gefahr von Ermüdungsbrüchen, vergl. z.B. (7), einzugrenzen, wurde die Anlage mit dem höhere Drücke und Wärmeleistungen bringenden Kältemittel R 22 (4) befüllt. Eine maximale Fußbodentemperatur $\vartheta_F$ von über 50° C wurde erreicht.

Da die Anlage typischerweise pro Tag einmal für mehrere Stunden läuft, wird sie während einer Heizperiode ca. 250 mal an- und abgeschaltet; in 10 Jahren sind das 2.500 mal.

Um das zu simulieren, wurde die Anlage wochenlang im 1/4 Stunden Takt an- und abgeschaltet. Dabei wurde eine Fußlbodentemperatur von ca. 40° C und eine Druckschwankung im Heizrohr von ca. 6 bar gemessen, d.h. derselbe Wert, der beim Normalbetrieb im Heizrohr nach längerem Lauf bzw. längerem Stillstand des Verdichters auch gemessen wird.

Trotz der hohen Druck- und Wärmebelastung hielt das Heizrohr (4,6) stand. Ein Kältemittelverlust konnte nicht beobachtet werden. Erneute Messungen zur Normkennlinie ergaben bei gleichen Fußbodentemperaturen keine erhöhten Kondensationsdrücke: Der Wärmedurchgang Kupferrohr-Lastverteiischicht hatte sich also nicht verschlechtert.

Danach wurden Messungen mit vorgeschaltetem Überhitzungskonvektor (19) durchgeführt. Die Raumluft konnte dadurch erheblich schneller erwärmt werden, aber es traten Geräuschbelästigungen auf, die sich in diesem Fall nur durch eine erhebliche Umkonstruktion der Anlage beheben ließen.

Danach wurde ein 20 cm$^3$ Verdichten und R 12 Kältemittel eingesetzt. Damit wurde die anlage über ein Jahr lang - auch außerhalb der Heizperiode mindestens eine Stunde pro Tag - im Normalbetrieb gefahren. Leistungsverschlechterungen konnten nicht beobachtet werden.

Bei einer Speicherwassertemperatur von 12° C, einer Verdampfungstemperatur von 5° C und einer Kondensationstemperatur von 45° C wurde bei einer elektrischen Leistungsaufnahme $P_e$ = 700 W eine Verdampfungsleistung von $P_v$ = 2.000 W und eine Kondensatorleistung von $P_k$ = 2.500 Watt bestimmt, d.h. diese typischen Werte wurden an einem gleichartigen Wärmepumpen-Versuchsaufbau, der die gleichen Kältemitteldrücke und -temperaturen und Leistungsaufnahmen aufwies, auf kalorimetrischem Wege gemessen.

Dadurch, daß der Verdichter (9) während einer vollen Heizperiode über eine Schaltuhr gesteuert jeweils nur einige Stunden vor Sonnenaufgang lief, konnte die Lufttemperatur in der Mitte des Apartments auf einem Tisch gemessen in der Zeit von 7 bis 22 Uhr auf 20° C ± 1 K konstant gehalten werden.

Um die gleiche Behaglichkeit in einem ähnlichen, aber durch eine mit einem Gebläsekonvektor von einer weit größeren Wärmepumpe beheizten Wohnraum zu erzielen, mußte dessen Lufttemperatur 2 K höher sein. Das wurde sowohl bei einer Lufttemperatur von 20° C alsauch bei 26° C festgestellt.

Über einen Zähler für die elektrische Arbeitsaufnahme wurde der Stromverbrauch während einer Heizperiode zu 560 kWh gemessen. Die Heizenergieabgabe dürfte 2.000 kWh betragen haben.

Analyse

Der Temperaturabfall in dem d = 2 mm dicken Kunststoffmantel eines handelsüblichen Heizrohres beträgt bei $\lambda_M$ = 0,14 W/mK, vergl. (3), Fußnote 2 und der hier vorliegenden Wärmebelastung

$$\dot{q} = 2.500 \text{ W}/50 \text{ m} = 50 \text{ W/m}; \quad \Delta\vartheta = \frac{\dot{q} \cdot d}{\lambda_M \cdot \Delta} = \frac{50 \cdot 0,002}{0,14 \cdot 0,05} = 14\text{K}$$

Der Kondensationsdruck würde beim Einsatz des ummantelten Rohres mit dem Kältemittel R 12 nicht mehr knapp 11 bar, sondern 15 bar betragen, vergl. (4). Das Druckverhältnis Kondensatordruck zu Verdampfungsdruck würde von 3,0 auf 4,2 steigen, der Liefergrad, vergl. (6), erheblich absinken und die Arbeitszahl der Wärmepumpe würde von ca. 3,6 auf ca. 2,6 sinken: Bei dem hier vorgestellten Fall dürfte der Stromverbrauch der Warmepumpe bei gleicher Wärmeabgabe um ca. 40 % wegen des nur 2 mm dikken Kunststoffmantels steigen !

Schwindet der Durchmesser des das Kupferrohr umgebenen "harten" Betonrohres beim Aushärten z.B. um 1 %, entstünde im elastisch gedachten Kupferrohr in erster Näherung eine Druckspannung

$$\sigma = \varepsilon \cdot E = 0,01 \cdot 110.000 \text{ N/mm}^2 = 1.100 \text{ N/mm}^2$$

Das "weiche" Kupferrohr wird aber vom "harten" Beton allseitig gleichmäßig zusammengedrückt: es verformt sich zu knapp 1 % plastisch.

Geht man davon aus, daß die Temperatur des Kupferrohres beim Betrieb der Anlage zwischen einer Kondensationstemperatur von 45° C und der Raumtemperatur $\vartheta_i = 20°$ C, also um 25 K schwankt, ergibt sich mit $\alpha_{cu} = 1,65 \cdot 10^{-6}$ eine Dehnung $\varepsilon$

$$\varepsilon = 25 \cdot 1,65 \cdot 10^{-6} = 0,41 \cdot 10^{-3}$$

die - weil diese Dehnung durch den Betonpanzer verhindert wird - im Kupferrohr eine Druckspannung $\sigma = \varepsilon \cdot E = 45$ N/mm² induziert, die - auch von SF-Cu F 20 - leicht ertragen wird, vergl. (8).

Ein Schaden tritt dabei wegen der auf ca. $10^4$ beschränkten Lastwechselzahl während einer Lebensdauer von 20 bis 40 Jahren und mehr nicht ein, weil auch höhere Belastungen von Cu F 20 teils elastisch teils kriechend aufgenommen werden. Als Anhaltspunkt mag die in (9) in Tabelle 59 auf Seite 702 von Herrn Wallbaum, Fa. Kabel und Metallwerke für $10^8$ (schnelle) Lastwechsel veröffentlichte Biegewechselfestigkeit $\sigma_{bw} = 65 - 77$ N/mm² gelten.

Weil das Kupferrohr allseitig im Beton eingespannt ist, kann es nicht frei hin- und herschieben, was an kritischen Stellen schnell zur Materialermüdung führen könnte.

Literatur

(1) Die fachgerechte Kupfer-Installation, DKI Nr. i 158
(2) System, Planung, Montage: cuprotherm Fußbodenheizung mit Kupferrohr, März 1989
(3) Pohl, M: Verfahren für die Berechnung von Kupferrohr-Fußbodenheizungen, HLH 35 (1984) Vol 3 & 5, DKI S. 180
(4) Frigen-Fibel für die Kälte-, Klima- und Energietechnik, Hoechst AG, Oktober 1985
(5) Frigen-Information KT 08/88: H-FCKW 123 und H-FKW 134 a, Substitutionsprodukte für Frigen 11 und Frigen 12 in der Kältetechnik; Hoechst AG, Februar 1989
(6) Reichelt, J.: R 22 oder R 502 als Kältemittel,
Temperatur Technik, Jan/Febr. 1977, Forster Verlag, Zürich
(7) Langer, K-H, Pohl, M: Planung und Verlegung von Kupferrohr-Fußbodenheizungen, DKI S.179 & IKZ Vol 4,7,8,9/1983
(8) Drefahl, K, Kleinau, M, Steinkamp, W: Zeitstandeigenschaften und Bemessungskennwerte von Kupfer und Kupferlegierungen für den Apparatebau, METALL 5/1982 & DKI S. 178
(9) Landolt-Börnstein: Stoffwerte und Verhalten von metallischen Werkstoffen, 6. Auflage, Springer 1964
(10) Heizungshandbuch, Krupp AG, 1965
(11) von Franqué, 0: Korrosionsverhalten von Kupfer und Kupferlegierungen im Erdboden, DKI S. 174 & 3Rinternat Vol 18, 8/9 197

**Patentansprüche**

1. Flächenstrahlungsheizungs/Kühlungsanlage, bei der mindestens eine aus Wohnungsbaumaterialien bestehende Aufenthaltsraum-Umfassungsfläche (8) gasdruckdichte Kanäle (4,6) in gutem thermischen Kontakt zu dieser Fläche (8) enthält, mit einer eine Verdichteranordnung (9) und eine Drosseleinrichtung (15) aufweisenden Wärmepumpe, wobei die Kanäle (4,6) mit einem Ende dieser Verdichteranordnung (9) verbunden sind, dadurch gekennzeichnet, daß im Heizfall die an die Verdichteranordnung anschließenden Kanäle (4,6) zunächst zu führend im Estrich oder der Raumdecke einer Außenwand oder einem Fenster oder im Putz der Wand in zirkularer Anordnung eingebaut sind und den Kondensator der Wärmepumpe bilden, wobei am anderen Ende der Kanäle (4,6) ein Schauglas (16) angeordnet ist und im Kühlfall die vorzugsweise in der Raumdecke eingebauten Kanäle (4,6) den Verdampfer der Wärmepulmpe bilden.

2. Flächenstrahlungsheizungs/Kühlungsanlage nach Anspruch 1, dadurch gekennzeichnet, daß die Heiz/Kühlkanäle (4,6) an Fenstern mit geringem gegenseitigen Abstand d eingebaut sind.

3. Flächenstrahlungsheizungs/Kühlungsanlage nach Anspruch 1, dadurch gekennzeichnet, daß vor der Fläche (8), in der die Kanäle (4,6) eingebaut sind, ein Überhitzungs Konvektor (19) geringer Wärmeträgheit eingebaut ist.

4. Flächenstrahlungsheizungs/Kühlungsanlage nach Anspruch 1, dadurch gekennzeichnet, daß durch ein vor- bzw. hinter der Verdichteranordnung (9) eingebautes Kältemittelgas-Umkehrventil Kondensator und Verdampfer vertauschbar sind.

5. Flächenstrahlungsheizungs/Kühlungsanlage nach Anspruch 1, dadurch gekennzeichnet, daß sie als Speicherheizung ausgelegt ist und durch eine Zeitschaltuhr, die von der Außentemperatur beeinflußt wird, automatisch an- und abschaltbar ist.

6. Flächenstrahlungsheizungs/Kühlungsanlage nach Anspruch 1, dadurch gekennzeichnet, daß auf den Kanälen (4,6) eine Lastverteilschicht oder ein Putz aufgebracht ist und daß die Kanäle (4,6) unter einem Druck im Bereich von 25 bar stehend eingebaut werden, wobei dieser Druck ständig durch eine Druckmeßeinrichtung überwacht wird.

7. Flächenstrahlungsheizungs/Kühlungsanlage nach Anspruch 1, dadurch gekennzeichnet, daß auf der Hochdruckseite der Verdichteranordnung (9) ein Pressostat eingesetzt wird, der die Aufenthaltsraum-Umfassungsfläche gegen Temperatürberschreitungen schützt.

8. Flächenstrahlungsheizung/Kühlungsanlage nach einem der Ansprüche 1-7, mit Verdampfer/Kondensator, der in einem Wasserspeicher (12) eingebaut ist, dadurch gekennzeichnet, daß der Verdampfer/Kondensator aus horizontalen Rohrkurven zusammengesetzt ist, die die Wasserschichten des Speichers (12) zur Verdichteranordnung (9) hin von unten nach oben durchdringen und im Verdampfungsfall mithilfe eines Schwimmers (14) bei jedem Füllstand des Speichers (12) direkt unter seiner Oberfläche gehalten werden und daß sowohl das Saugrohr (10) als auch das Einspritzrohr (14') elastisch federnd - vorzugsweise in Form einer Haarnadelfeder (11) - ausgeführt sind.

9. Flächenstrahlungsheizung/Kühlungsanlage nach Anspruch 8, dadurch gekennzeichnet, daß der Wasserspeicher (10) als Eisspeicher ausgelegt ist.

## Claims

1. Direct surface heating/cooling installation, wherein at least one space-encircling surface (8), which is constructed from home building materials, contains channels (4,6), which prevent the loss of gas under excess pressure and by diffusion, wherein said channels (4,6) are connected in a low thermal resistance manner to said surface (8).

   One end of said channels (4) is connected to the pressure side of the compressor of an heat pump, which contains a valve means (15).

   In the heating mode, those channels (4), which are directly connected to the pressure side of the compressor (9) are built into the concrete of the floor or of the ceiling or of a wall near of an outer wall or near of a window in a circular manner, form the condenser of said heat pump, wherein the other end of said channel (6) contains a sight glass.

   In the cooling mode, said channels (4,6) a built preferably into the ceiling of the room to be cooled and form the evaporator of said heat pump.

2. Direct surface heating/cooling installation according to claim 1, wherein said channels (4,6) contain a relative small distance d to the next channel near windows, i.e. distance d varies with heat demand.

3. Direct surface heating/cooling installation according to claim 1, wherein in front of a surface (8), which contains the channels (4,6), a convector (19) is positioned.

4. Direct surface heating/cooling installation according to claim 1, wherein condenser and evaporator may be exchanged by a reversing valve, which is connected to the suction- and the pressure-side of the compressor.

5. Direct surface heating/cooling installation according to claim 1, which comprises a storage heating system, which is controlled automatically by a clock, which is influenced by outside temperature.

6. Direct surface heating/cooling installation according to claim 1, wherein on top of said channels (4,6) a concrete floor is constructed and said channels (4,6) are pressurised to approximately 25 bar, when they are installed, and said pressure is controlled by a pressure-gauge continously.

7. Dicect surface heating/cooling installation according to claim 1, wherein at the pressure-side of the compressor a pressure-swith is installed, which prevents the surface (8) to be overheated.

8. Direct surface heating/cooling installation according to one of the claims 1-7, wherein a condenser/evaporator constructed from tubes curved horizontally is held in place in the evaporator-mode direct under the surface of a storage tank (12) containing water by a float (14), wherin the suction tube (10) and the feeding tube (14') are formed elastically, preferably in form of an hair-needle (11).

9. Direct surface heating/cooling installation according to claim 8, wherein the storage tank (12) serves as an ice storage for cooling means.

**Revendications**

1. Installation de chauffage/refroidissement directement sur la surface - en que au minimum un surface de local renferme tuyaux hermetiques (4,6), que sont en bon contact thermique avec la surface (8) - par pompe à chaleur que comprend un compresseur (9) et un détendeur (15) où les tuyaux (4,6) sont contigu à bout de compresseur (9), caractérisée en ce que les tuyaux (4,6) noyées dans le plancher en béton des locaux ou dans le plafond ou en crepi de le mur après le compresseur (9) sont installé en un arrangement spiroidal condurent avant tout à un mur extérieur ou à un appui de fenétre. Ils sont le condensateur de la pompe à chaleur en cas de chauffage et comprend un plaque de verre à ses autre bout.
Les tuyaux (4,6) sont l'evaporateur de la pompe à chaleur en cas de refroidissement. En ce cas ils ont installé dans le plafond de local refroidé de préférence.

2. Installation de chauffage/refroidissement directement sur la surface selon la revendication 1 caractérisée en ce que les tuyauteries (4,6) noyées dans le plancher des locaux à chauffer (8) ont de petites distances mutuelles de long des fenétres.

3. Installation de chauffage/refroidissement directement sur la surface selon la revendication 1 caractérisée en ce que un convecteur de surchauffer (19) de petite inertie thermique est installe devant le plancher (8).

4. Installation de chauffage/refroidissement directement sur la surface selon la revendication 1 caractérisée en ce que le condenseur et l'évaporateur sont échangeable à traves de une supape réversible monté devant ou après le compresseur (9).

5. Installation de chauffage/refroidissement directement sur la surface selon la revendication 1 caractérisée en ce que elle est aménagée pour un'installation de chauffage d'emmagasin, que est misé en marche par un minuteur influencé de la température extérieur.

6. Installation de chauffage/refroidissement directement sur la surface selon la revendication 1 caractérisée en ce que un enduit ou un crepi est sur les tuyaux (4,6) et elles sont intallé dans un pression environ de 25 bar et cette pression est controllé continuellement par un manomètre.

7. Installation de chauffage/refroidissement directement sur la surface selon la revendication 1 caractérisée en ce que un régulateur de pression es installé après le compresseur (9) que protege la surface (8) contre hausses de temperature inadmissibles.

8. Installation de chauffage/refroidissement directement sur la surfasce selon la revendications 1 - 7 avec un condenseur/évaporateur que es installé en un réservoir (12) caracterisée en ce que le condenseur/évaporateur (13) est composé des tuyaux condés horizontalles, que traversent de bas en'haut les strates d'eau de réservoir (12). Il a teni en cas de évaporeteur au-dessous de la surface de l'eau grâce un flotteur (14). Non seulment le tuyau de aspirer (10) mais aussi le tuyau de injecter (14') son réalise élastique en forme de une épingle à cheveux (11) de préférence.

9. Installation de chauffage/refroidissement directement sur la surface selon la revendication 8 caractérisée en ce que le réservoir (12) est aménagé pour un réservoir de glace (de froid).

Schnitt A-A

EP 0 466 840 B1